# EUROPEAN PATENT APPLICATION

(11) **EP 4 769 720 A1**
(43) Date of publication of application: **01.07.2026**
(21) Application number: 25831148.9
(22) Date of filing: 16.06.2025
(51) Int. Cl.: H01M 50/242, H01M 50/211

(54) **BATTERY MODULE AND BATTERY PACK INCLUDING SAME**

(30) Priority: 20.06.2024 KR 20240080419
(71) Applicant: LG Energy Solution, Ltd., Seoul 07335 (KR)
(72) Inventor: JANG, Sungman, Daejeon 34122 (KR)
(74) Representative: Goddar, Heinz J.
(86) International application number: PCT/KR2025/008274
(87) International publication number: WO 2025/263934

(57) **Abstract**

Provided is a battery pack comprising: a plurality of battery modules, each including a plurality of battery cells; and a pack housing accommodating the plurality of battery modules. At least one of the plurality of battery modules includes: a cell stack in which the plurality of battery cells are stacked; a side plate that is disposed on one side of the cell stack and coupled to the pack housing; and an elastic member disposed between the cell stack and the side plate. The elastic member includes: a frame part supported by the side plate; and a plurality of elastic ribs that extend from the frame part in a direction inclined relative to the stacking direction of the plurality of battery cells, and elastically deform and apply an elastic force to the cell stack as the cell stack expands.

## Description

### Technical Field

The present disclosure relates to a battery module and a battery pack including the same.

### Background Art

Secondary batteries can be recharged and discharged, so they are widely used in mobile devices such as digital cameras, cell phones and laptops, and have recently been attracting attention as an energy source for electric vehicles and energy storage systems (ESS).

Gas may be generated inside the battery cell during repeated charging and discharging of the secondary battery, and due to the gas generated in this way, a swelling phenomenon may occur, causing the battery cell to expand and contract. The swelling phenomenon reduces the charge-discharge performance of a secondary battery, and there is a risk that the shape of the case is deformed, thereby compromising structural rigidity.

Meanwhile, even though the secondary batteries need to maintain a certain initial pressure before use, existing compression pads alone have limitations in forming initial pressure greater than a certain size.

Accordingly, there is a need for the development of a pressurizing structure that can control the swelling phenomenon that occurs during charging and discharging while applying an appropriate initial pressurizing force.

### Detailed Description of the Invention

### Technical Goals

The present disclosure is devised to solve at least some of the problems of the prior art as described above, and is to provide a battery module and a battery pack capable of applying an appropriate initial pressure to a battery cell while controlling the swelling phenomenon that occurs during charging and discharging.

### Technical solutions

In order to achieve the above purpose, in example embodiments of the present disclosure, provided is a battery module including a cell stack in which a plurality of battery cells are stacked, an elastic member that is placed at one side of the cell stack, and is configured to apply surface pressure to the cell stack in a direction parallel to a direction in which the plurality of battery cells are stacked, and a module housing in which the cell stack and the elastic member are accommodated, wherein the elastic member includes a frame portion that is supported by the module housing, and a plurality of elastic ribs extending from the frame portion in an inclined direction with respect to the direction in which the plurality of battery cells are stacked, and configured to elastically deform as the cell stack expands so as to apply an elastic force to the cell stack.

In example embodiments, at least one of the plurality of elastic ribs may include a first pressing portion extending from the frame portion, and a second pressing portion connected to an end portion of the first pressing portion, wherein a width of the second pressing portion is smaller than a width of the first pressing portion.

In example embodiments, in the elastic member, the plurality of elastic ribs may be arranged symmetrically with respect to a central axis parallel to a longitudinal direction of the battery cell.

In example embodiments, at least one of the first pressing portion and the second pressing portion may have a width that gradually decreases toward the central axis.

In example embodiments, the first pressing portion and the second pressing portion may be made of different materials.

In example embodiments, the frame portion may be provided as a frame-shaped structure having a pair of long side edges and a pair of short side edges, and the plurality of elastic ribs may be connected to at least one of the pair of long side edges.

In example embodiments, the battery module may further include a compression pad that is placed between the plurality of battery cells and the elastic member.

In example embodiments, provided is a battery pack including a plurality of battery modules, each including a plurality of battery cells, and a pack housing in which the plurality of battery modules are accommodated, wherein at least one battery module among the plurality of battery modules includes a cell stack in which the plurality of battery cells are stacked, a side plate that is placed at one side of the cell stack and coupled to the pack housing, and an elastic member that is placed between the cell stack and the side plate, and wherein the elastic member includes a frame portion that is supported by the side plate, and a plurality of elastic ribs extending from the frame portion in an inclined direction with respect to the direction in which the plurality of battery cells are stacked, and configured to elastically deform as the cell stack expands so as to apply an elastic force to the cell stack.

In example embodiments, the at least one battery module may further include a pressing plate that is interposed between the cell stack and the elastic member.

In example embodiments, the at least one battery module may further include a connecting member that connects the pressing plate and the side plate.

In example embodiments, the at least one battery module may further include a compression pad that is placed between the pressing plate and the plurality of battery cells.

In example embodiments, in the at least one battery module, a lower surface of the cell stack may be exposed to the pack housing.

In example embodiments, at least one elastic rib among the plurality of elastic ribs may include a first pressing portion extending from the frame portion, and a second pressing portion connected to an end portion of the first pressing portion, wherein a width of the second pressing portion is smaller than a width of the first pressing portion.

In example embodiments, the frame portion may be provided as a frame-shaped structure having a pair of long side edges and a pair of short side edges, and the plurality of elastic ribs may be connected to at least one of the pair of long side edges.

### Effects of the Invention

According to the example embodiments, implemented are battery modules and battery packs by which it is possible to apply an appropriate level of initial pressure to battery cells, and effectively control the swelling phenomenon that occurs during charging and discharging.

### Brief Description of Drawings

FIG. 1 is a perspective view of a battery pack including a battery module according to example embodiments.
FIG. 2 is an exploded perspective view of a battery module according to example embodiments.
FIG. 3 is an exploded perspective view of a cell stack included in a battery module according to example embodiments.
FIG. 4 is an exploded perspective view of a pressing assembly included in a battery module according to example embodiments.
FIG. 5 is a perspective view of an elastic member included in a pressing assembly.
FIG. 6 is a cross-sectional view along section I-I' of FIG. 5.
FIG. 7 is a graph illustrating the pressure exerted on the cell stack by the elastic member included in a pressing assembly.
FIG. 8 is an exemplary cross-sectional view of a battery module according to example embodiments.
FIG. 9 is an exemplary cross-sectional view of a battery module according to example embodiments.
FIG. 10 is an exploded perspective view of a battery module according to another example embodiment.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. Terms such as "include" or "comprise" should be understood to specify the presence of a feature, number, step, operation, component, part or combination thereof described in the specification, but not to exclude in advance the possibility of the presence or addition of one or more other features, numbers, steps, operations, components, parts or combinations thereof.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

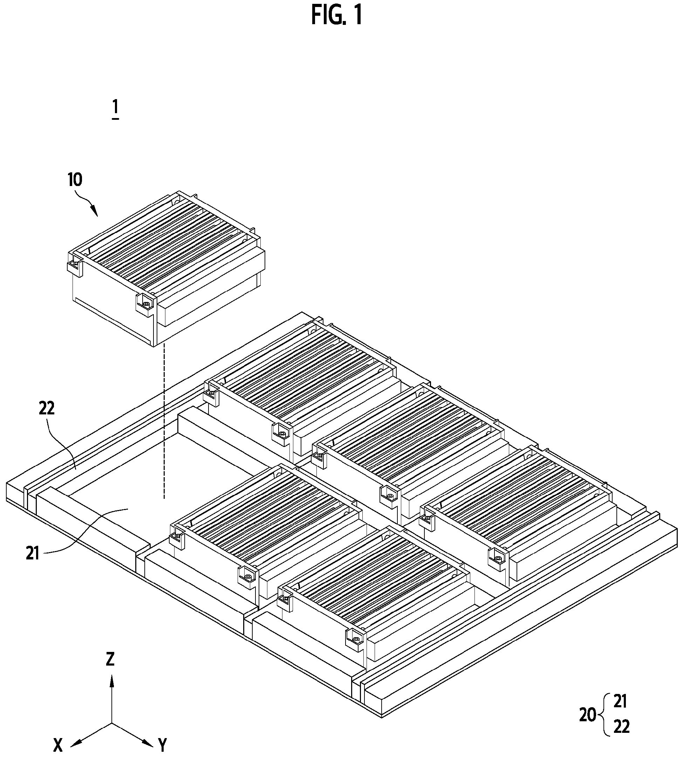

FIG. 1 is a perspective view of a battery pack 1 including a battery module 10 according to example embodiments.

Referring to FIG. 1, the battery pack 1 according to example embodiments may include a plurality of battery modules 10 and a pack housing 20 in which the plurality of battery modules 10 are accommodated.

The plurality of battery modules 10 may be accommodated in the pack housing 20. The pack housing 20 may include a lower plate 21 and a plurality of support beams 22. The battery module 10 may be installed in the inner accommodation space formed by the lower plate 21 and the plurality of support beams 22. Meanwhile, even though not illustrated in FIG. 1, the pack housing 20 may include an upper cover placed on top of a plurality of support beams 22 to close the accommodation space of the pack housing 20.

The lower plate 21 may form the lower surface of the pack housing 20. In various example embodiments, the lower plate 21 may be provided with a square plate member or a polygonal plate member other than a square plate, but the shape of the lower plate 21 is not necessarily limited thereto.

The plurality of battery modules 10 may be mounted on the upper portion of the lower plate 21.

The lower plate 21 may be formed of a rigid metal material. For example, at least a portion of the lower plate 21 may include aluminum. When the lower plate 21 contains aluminum, due to the excellent thermal conductivity of aluminum, it is expected that the heat energy generated in the battery module 10 is quickly dissipated to the outside of the battery pack 1.

The support beam 22 may be connected to the lower plate 21. For example, referring to FIG. 1, the support beam 22 may be placed on the upper portion surface of the lower plate 21 to partition the interior space of the pack housing 20. The space defined by the support beam 22 may accommodate one or more battery modules 10. For example, at least some of the plurality of support beams 22 may form the sides of the pack housing 20.

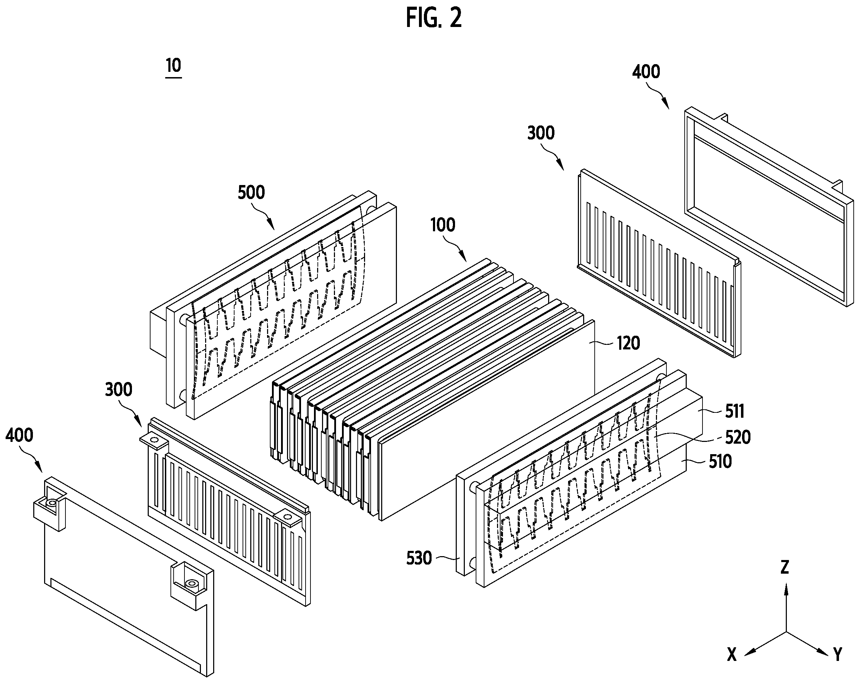

FIG. 2 is an exploded perspective view of the battery module 10 according to example embodiments.

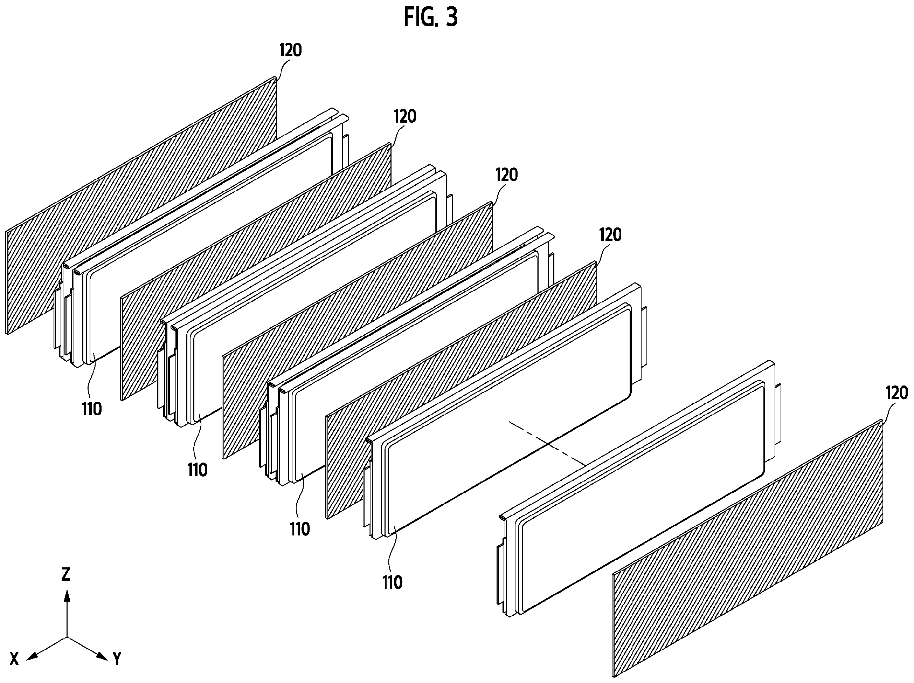

FIG. 3 is an exploded perspective view of a cell stack 100 included in the battery module 10 according to example embodiments.

Referring to FIG. 2 and FIG. 3, the battery module 10 according to example embodiments may be configured to output or store electrical energy by including one or more battery cells 110.

The plurality of battery cells 110 included in the battery module 10 may form at least a portion of the cell stack 100 by being stacked in one direction (for example, the Y-axis direction of FIG. 2). In the following description, the direction in which the battery cells 110 are stacked is referred to as the "cell-stacked direction."

In example embodiments, the battery cell 110 may be a secondary battery that is configured to be recharged and discharged.

For example, referring to FIG. 2 and FIG. 3, the battery cell 110 may be a pouch-type secondary battery in which an electrode assembly is housed inside a sealed pouch.

In a pouch-type secondary battery, the electrode assembly and electrolyte may be stored inside a pouch formed by processing one or more outer materials. The outer material forming the pouch may be composed of aluminum laminated film, but the specific material is not limited thereto.

However, the shapes illustrated in FIG. 2 and FIG. 3 are only exemplary shapes of the battery cell 110, and the battery cell 110 included in the battery module 10 according to example embodiments is not limited to a pouch-type secondary battery. For example, the battery cell 110 may be configured as a square secondary battery in which an electrode assembly is housed inside a square case having a predetermined rigidity.

For example, the battery cell 110 may be composed of an all-solid-state battery.

Meanwhile, in various example embodiments, the cell stack 100 may further include a plate-shaped protection member configured to protect a plurality of battery cells 110.

For example, the plate-shaped protection member may include a compression pad 120 that may apply a predetermined surface pressure to the battery cell 110 to prevent the battery cell 110 from swelling during the charging and discharging process. The compression pad 120 may contain at least one of polyurethane, silicone, and rubber (EPDM). The compression pad 120 may press the battery cell 110 by elastic force or be compressed by the battery cell 110.

As illustrated in FIG. 3, a plurality of compression pads 120 and the plurality of battery cells 110 may be stacked along the cell-stacked direction (for example, the Y-axis direction). For example, the compression pad 120 and the battery cell 110 may be alternately stacked in the cell-stacked direction. For example, the plurality of battery cells 110 may be arranged to be interposed between the plurality of compression pads 120. For example, at least some of the plurality of compression pads 120 may be positioned at the outermost end of the cell stack 100, and at least some other compression pads 120 may be positioned between the plurality of battery cells 110.

However, in various example embodiments, the number or stacking method of the compression pads 120 and the battery cells 110 constituting the cell stack 100 is not limited to what is illustrated in FIG. 3, and in an example embodiment, the number and stacking method of the plate-shaped protection member and the battery cell 110 constituting one cell stack 100 may be varied as needed.

The battery module 10 may include a busbar assembly 300 electrically connected to the battery cells 110 of the cell stack 100.

The busbar assembly 300 is arranged on at least one side of the cell stack 100 to electrically connect the battery cells 110 to each other. For example, a pair of busbar assemblies 300 are provided, so that one busbar assembly 300 may be placed at each end of the cell stack 100. However, the busbar assemblies 300 may be interconnected to form a single component.

In the battery module 10, an end cover 400 may be placed on the outside of the busbar assembly 300. The end cover 400 may include a material having rigidity (for example, a metal such as aluminum or a resin compound) to protect the cell stack 100 from external impact. Even though not illustrated, in order to prevent the end cover 400 and the busbar assembly 300 from being electrically short-circuited, an insulating cover (not illustrated) containing an insulating material may be placed between the end cover 400 and the busbar assembly 300.

Meanwhile, in example embodiments, the battery module 10 may further include a pressing assembly 500 that presses the cell stack 100.

A pair of pressing assemblies 500 may be provided, and each pressing assembly 500 may be placed on either side of the cell stack 100. For example, the pair of pressing assemblies 500 may be arranged spaced apart at both ends of the cell stack 100 along the cell-stacked direction with the cell stack 100 between them. Accordingly, two faces of the cell stack 100 may face the pressing assembly 500, and the other two faces may face the busbar assembly 300 and the end cover 400.

When the battery cell 110 is repeatedly charged and discharged, a swelling phenomenon occurs in which the battery cell 110 expands due to gas generated inside the battery cell 110 and there is concern that the electrical performance of the battery cell 110 may deteriorate.

In order to suppress this swelling phenomenon, the pressing assembly 500 may be configured to suppress the swelling phenomenon of the battery cell 110 by applying surface pressure to the cell stack 100 to resist the expansion pressure of the cell stack 100.

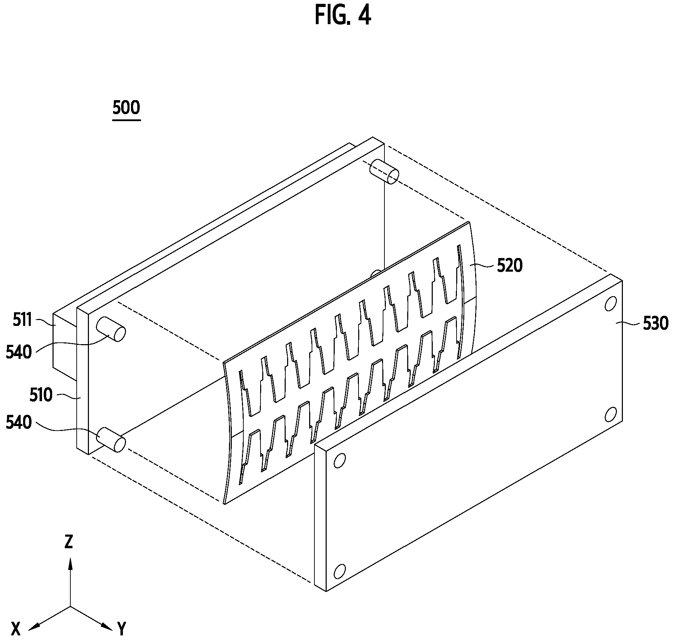

FIG. 4 is an exploded perspective view of the pressing assembly 500 included in the battery module 10 according to example embodiments.

Referring to FIG. 2 and FIG. 4, the pressing assembly 500 according to example embodiments may include a side plate 510 coupled to the pack housing 20, a pressing plate 530 spaced apart from the side plate 510 along the cell-stacked direction, and an elastic member 520 interposed between the side plate 510 and the pressing plate 530.

The side plate 510 is configured to be combined with the pack housing 20, and may form the outer side of the battery module 10 together with the end cover 400. For example, the side plate 510 and the end cover 400 may function as a module housing (the side plate 510 and the end cover 400) for the battery module 10, and it may be understood that components such as the cell stack 100 and the elastic member 520 are accommodated in the inner space of the module 10 formed by the side plate 510 and the end cover 400.

The side plate 510 and the pressing plate 530 are interconnected via a connecting member 540, and the elastic member 520 is sandwiched between the side plate 510 and the pressing plate 530.

The connecting member 540 may connect the side plate 510 and the pressing plate 530, and at the same time, may act as a stopper to set the maximum gap (e.g., initial gap) between the two members.

For example, the connecting member 540 allows the elastic member 520 to remain interposed between the side plate 510 and the pressing plate 530 while the pressing assembly 500 is assembled with other components of the battery module 10 (for example, the cell stack 100 or the end cover 400).

The elastic member 520 may be elastically deformed as the cell stack 100 expands. The elastic member 520 may pressurize the cell stack 100 in the cell-stacked direction (for example, the Y-axis direction) by the elastic force. The elastic member 520 is composed of a material having a certain stiffness (for example, metal or plastic), and be configured to be elastically deformable by an external force.

The pressing plate 530 is placed between the cell stack 100 and the elastic member 520, so that the elastic force generated from the elastic member 520 may be transmitted to the cell stack 100. In the process, as the pressing plate 530 is configured in a flat shape, the pressing plate 530 may apply a uniform surface pressure to the cell stack 100 by evenly distributing the elastic force of the elastic member 520 to one side of the cell stack 100 (for example: the outermost surface in the cell-stacked direction of the cell stack 100).

Meanwhile, one or more compression pads 120 may be interposed between the pressing plate 530 and the battery cell 110, and accordingly, even if the surface of the battery cell 110 is uneven, the compression pad 120 acts as a buffer to form a uniform surface pressure on the battery cell 110.

In an example embodiment, the side plate 510 may include a bonding part 511 that is joined to the pack housing 20. For example, a fastening member such as a bolt may be used to connect the bonding part 511 and the pack housing 20.

Meanwhile, in an example embodiment, the cell stack 100 included in the battery module 10 may be covered on four sides by the end covers 400 or by the pressing assembly 500, and the upper and lower surfaces may be exposed to the outside of the battery module 10.

For example, referring to FIG. 1 and FIG. 2, with respect to the battery module 10, a separate covering member covering the upper and lower surfaces of the cell stack 100 may be omitted, and accordingly, the upper and lower surfaces of the cell stack 100 may be exposed with respect to the pack housing 20.

According to the structure, the heat energy generated from the battery cell 110 may be transferred to the pack housing 20 more quickly, and thus the heat dissipation efficiency of the battery module 10 may be increased.

Further, as a separate covering member covering the upper and lower surfaces of the cell stack 100 being omitted, the size of the battery cell 110 may be increased by the space secured, or other components may be placed more, and thus energy density and space efficiency may be increased within the limited interior space of the pack housing 20.

The "battery module" according to the present disclosure may be understood as a variety of energy storage devices configured by assembling a plurality of battery cells. For example, in the battery module according to the present disclosure and the battery pack including the same, the "battery module" may be understood as a concept that includes not only the generally referred to battery module, but also cell assemblies, cell units, cell groups, cell blocks, or sub-battery packs for cell to pack (CTP) or cell to chassis (CTC) structures.

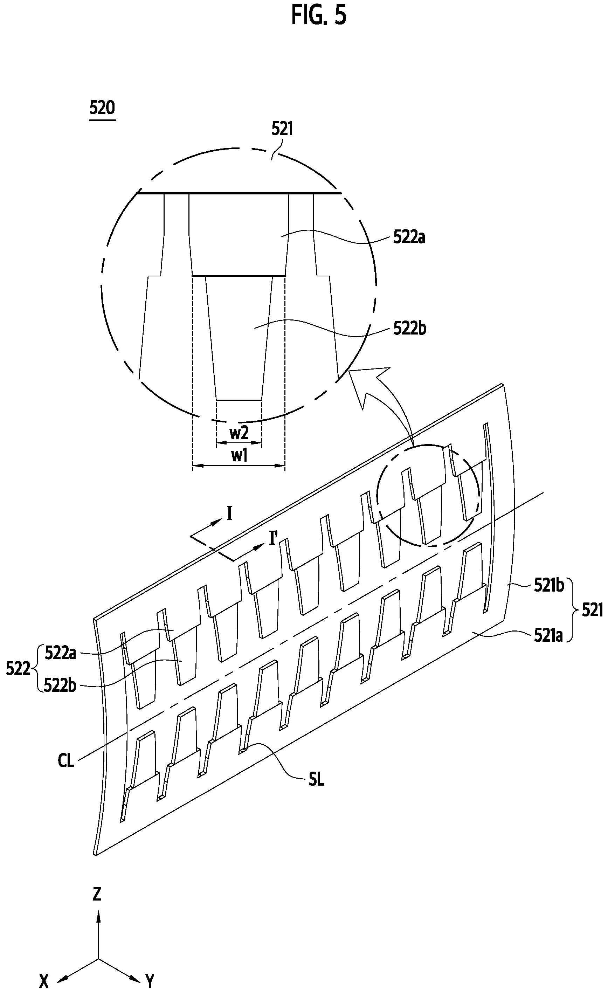

Hereinafter, referring to FIG. 5 to FIG. 6, the configuration of the pressing assembly 500 included in the battery module 10 according to example embodiments is described in more detail.

FIG. 5 is a perspective view of the elastic member 520 included in the pressing assembly 500.

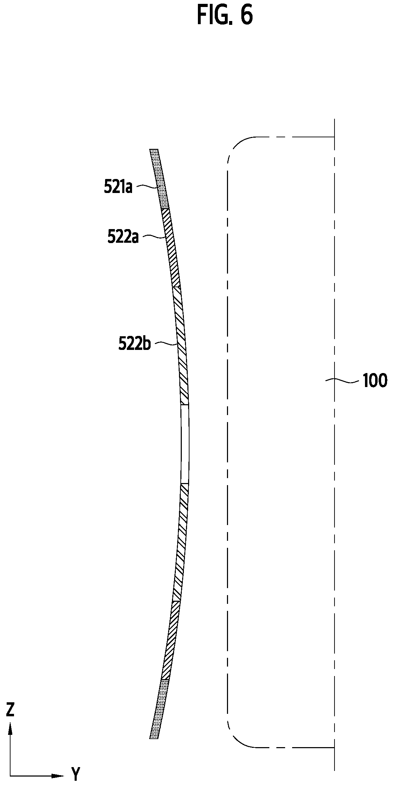

FIG. 6 is a cross-sectional view along section I-I' of FIG. 5.

In an example embodiment, the pressing assembly 500 may include the elastic member 520 placed between the side plate 510 and the pressing plate 530 to apply surface pressure to the cell stack 100. The elastic member 520 may be elastically deformed as the cell stack 100 expands, and may apply elastic force to the cell stack 100.

The elastic member 520 may include a frame portion 521 that is fixed to the side plate 510, and a plurality of elastic ribs 522 extending from the frame portion 521 and capable of elastic deformation.

The frame portion 521 is a part that forms the outer skeleton of the elastic member 520, and may be prepared in a shape corresponding to the shape of the battery cell 110. For example, when the battery cell 110 has a rectangular shape with long sides and short sides, in response thereto, the frame portion 521 may be provided as a frame-shaped structure having a pair of long side edges 521a and a pair of short side edges 521b.

The frame portion 521 is made of a material having a predetermined rigidity, but may be formed of a material capable of elastic deformation. For example, the frame portion 521 is made of a metal such as aluminum or a polymer material such as plastic, and may be configured to be elastically deformed by external force.

The elastic member 520 may include the plurality of elastic ribs 522 extending from the frame portion 521. The elastic rib 522 is a portion of the elastic member 520 that at least partially contacts the pressing plate 530, may be elastically deformed according to the expansion of the cell stack 100 and may apply surface pressure to the cell stack 100.

Referring to FIG. 5, the plurality of elastic ribs 522 may extend in a direction facing each other from the pair of long side edges 521a of the frame portion 521, and may be spaced apart from each other in the longitudinal direction (for example, the X-axis direction) of the long side edges 521a. Here, the longitudinal direction of the long side edge 521a may be parallel to the longitudinal direction of the battery cell 110. As such, as the elastic ribs 522 are arranged along the long side edge 521a of the frame portion, a greater number of elastic ribs 522 may be arranged in the inner region of the frame portion 521 (e.g., the region surrounded by the pair of long side edges 521a and the pair of short side edges 521b). Accordingly, the function of the pressing assembly 500 may be enhanced.

Each elastic rib 522 may be formed to extend at least partially from the frame portion 521 toward the cell stack 100. For example, referring to FIG. 6, the elastic rib 522 may extend obliquely from the frame portion 521 in a direction inclined with respect to the cell-stacked direction (the Y-axis direction). According to the structure, an end portion of the elastic rib 522 may be positioned further forward than the long side edge 521a of the frame portion in the direction toward the cell stack 100 (the Y-axis direction). When the cell stack 100 expands, the expansion pressure may be applied from the end of the elastic rib 522 to the cell stack 100, and there may be a gradual elastic deformation from the end of the elastic rib 522 to the long side edge 521a of the frame portion.

As illustrated in FIG. 5, in an example embodiment, the plurality of elastic ribs 522 may be arranged symmetrically with respect to the central axis CA of the frame portion 521. For example, the central axis CA may be substantially parallel to the longitudinal direction (the X-axis direction) of the battery cell 110 (for example: the long side direction of the battery cell 110). As such, when the plurality of elastic ribs 522 are symmetrically arranged, the concentration of elastic force in any part of the battery cell 110 may be prevented, and even surface pressure may be applied.

Meanwhile, the elastic member 520 may be configured to press the cell stack 100 with different pressure profiles depending on a degree of expansion of the cell stack 100. For example, the "pressure profile" may contain information about the change in elastic force according to the degree of expansion of the cell stack 100. For this, in an example embodiment, the elastic rib 522 of the elastic member 520 may include a first pressing portion 522a and a second pressing portion 522b having different widths.

Referring to FIG. 5 and FIG. 6 together, the elastic rib 522 of the elastic member 520 may include the first pressing portion 522a that protrudes and extends from the frame portion and the second pressing portion 522b connected to the end portion of the first pressing portion 522a and extending toward the direction of the central axis CA.

The first pressing portion 522a may extend from the frame portion in a direction oblique to the cell-stacked direction (the Y-axis direction). A slot part SL may be formed between one first pressing portion 522a and another adjacent first pressing portion 522a, and accordingly, each first pressing portion 522a may be elastically deformed individually.

The second pressing portion 522b may be connected to the end portion of the first pressing portion 522a. The second pressing portion 522b may extend obliquely to the cell-stacked direction (the Y-axis direction) from the end portion of the first pressing portion 522a.

Referring to FIG. 6, an end portion of the second pressing portion 522b may be positioned in front of the end portion of the first pressing portion 522a in the direction toward the cell stack 100 (the Y-axis direction). Therefore, when the cell stack 100 expands, the expansion pressure of the cell stack 100 may be applied from the end portion of the second pressing portion 522b, and the elastic force may be applied to the cell stack 100 as it gradually elastically deforms from the second pressing portion 522b to the first pressing portion 522a.

Meanwhile, as illustrated in FIG. 6, even though the first pressing portion 522a and the second pressing portion 522b are extended in the form of a gentle curvature, the specific form is not limited to what is illustrated in the drawing. For example, the first pressing portion 522a and the second pressing portion 522b may extend from the frame portion 521 in a direction inclined with respect to the cell-stacked direction, and may extend in a straight line without curvature. For example, the first pressing portion 522a and the second pressing portion 522b may be formed to have different curvatures.

In an example embodiment, the elastic rib 522 may be formed such that a width of the first pressing portion 522a and a width of the second pressing portion 522b are different from each other, so that the elastic rib 522 can press the cell stack 100 with different pressure profiles depending on a degree of expansion of the cell stack 100. Here, the "width" may refer to the length in the longitudinal direction (the X-axis direction) of the battery cell 110. For example, referring to FIG. 5, the width w2 of the second pressing portion 522b of the elastic rib 522 may be formed narrower than the width w1 of the first pressing portion 522a. Accordingly, the second pressing portion 522b may be more easily deformed by external force than the first pressing portion 522a, and the degree of the elastic force applied by the second pressing portion 522b may also be formed smaller than that of the first pressing portion 522a.

In an example embodiment, each of the first pressing portion 522a and the second pressing portion 522b may be formed so that each width gradually decreases as each of the first pressing portion 522a and the second pressing portion 522b approaches the central axis CA. However, the structures of the first pressing portion 522a and the second pressing portion 522b are not limited to those described above. For example, in another example embodiment, the first pressing portion 522a and the second pressing portion 522b may be extended to a certain width, or may have the same width.

In an example embodiment, the first pressing portion 522a and the second pressing portion 522b constituting the elastic rib 522 may be formed of different materials. Accordingly, the elastic rib 522 may press the cell stack 100 with different pressure profiles depending on the degree of expansion of the cell stack 100. For example, in an example embodiment, the first pressing portion 522a may be made of the same material as the frame portion 521, and the second pressing portion 522b may be made of a different material from the first pressing portion 522a. For example, the first pressing portion 522a may be made of a polymer resin material such as plastic, and the second pressing portion 522b may be made of a metal material such as aluminum. When the second pressing portion 522b is formed from a metal material, a higher elastic force may be generated than when it is formed from a polymer resin material.

Since it is configured that the materials of the first pressing portion 522a and the second pressing portion 522b to be different, the profiles of the elastic forces generated in the first pressing portion 522a and the second pressing portion 522b may be formed differently.

However, in an example embodiment, the materials of the first pressing portion 522a and the second pressing portion 522b are not limited to those described above, and as long as a material has elasticity, the material may be applied without limitation.

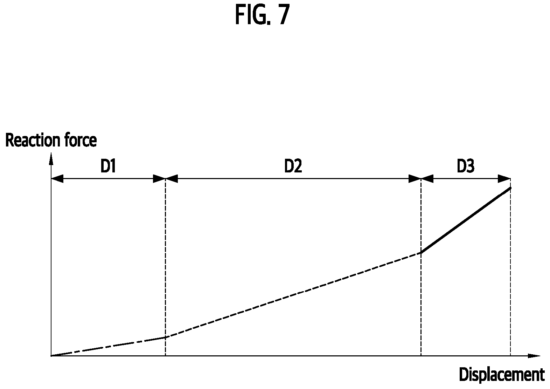

Hereinafter, referring to FIG. 7 to FIG. 9, the pressure profile applied to the cell stack 100 by the elastic member 520 included in the battery module 10 is described in more detail.

FIG. 7 is a graph illustrating the pressure exerted on the cell stack 100 by the elastic member 520 included in the pressing assembly 500.

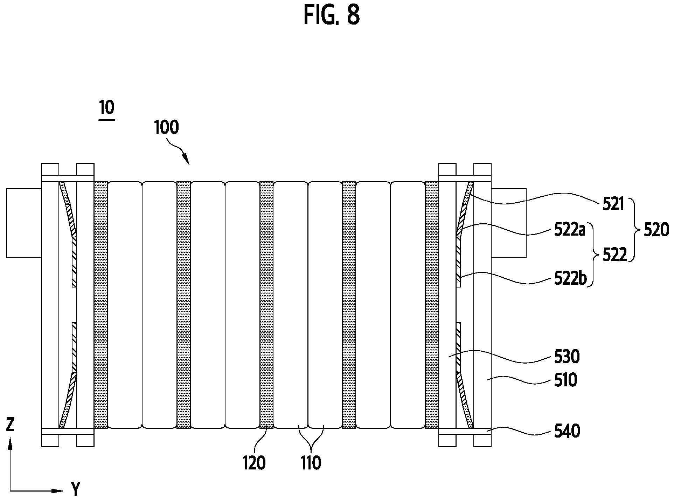

FIG. 8 is an exemplary cross-sectional view of the battery module 10 according to example embodiments.

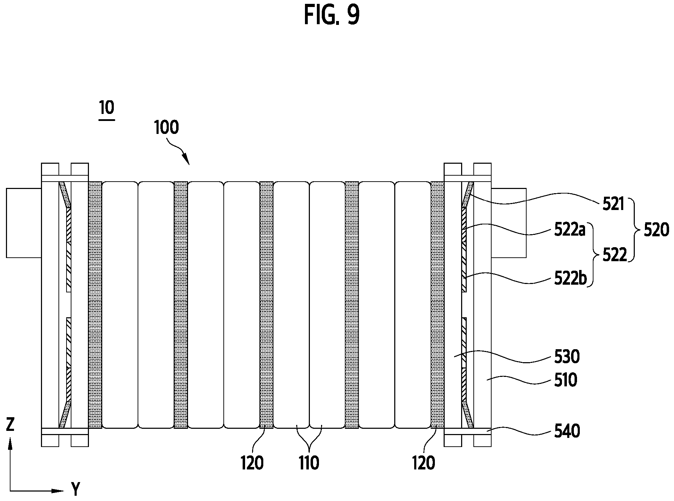

FIG. 9 is an exemplary cross-sectional view of the battery module 10 according to example embodiments.

In the graph of FIG. 7, the horizontal axis may represent the displacement (or the degree of deformation) of the elastic member 520 due to expansion of the cell stack 100. In the graph of FIG. 7, the vertical axis may represent the degree of the elastic force generated in the elastic member 520.

The D1 section of FIG. 7 may be an initial pressure section in which the elastic member 520 applies initial pressure to the cell stack 100 in the initial state before the battery module 10 is normally operated. FIG. 8 may correspond to a cross-sectional view of a state corresponding to D1 section of FIG. 7 in the battery module 10.

Referring to FIG. 7 and FIG. 8 together, in the D1 section (for example: initial pressure section), the elastic member 520 applies the initial pressure to the cell stack 100 by the elastic force generated by the elastic deformation of the second pressing portion 522b, thereby preventing the occurrence of empty spaces due to differences in the thickness of the battery cells 110 or manufacturing tolerances and may ensure that the battery cells 110 of the cell stack 100 are in close contact with each other.

Specifically, even though it is difficult to create an appropriate level of initial pressure with only the compression pad 120, according to an example embodiment, the elastic member 520 may form an appropriate level of initial pressure by the elastic force generated when the second pressing portion 522b is elastically deformed.

The D2 section of FIG. 7 may be a driving pressure section in which the elastic member 520 applies surface pressure to the cell stack 100 as the battery module 10 continuously expands through repeated charging and discharging. FIG. 9 is a cross-sectional view of the battery module 10 corresponding to D2 section of FIG. 7. In the section, as the cell stack 100 gradually expands, the first pressing portion 522a of the elastic member 520 also undergoes elastic deformation. Accordingly, the elastic member 520 may effectively suppress the swelling phenomenon of the battery cell 110 by applying a surface pressure stronger than the initial pressure to the cell stack 100.

In an example embodiment, the width of the first pressing portion 522a of the elastic member 520 may be greater than the width of the second pressing portion 522b, and accordingly, the pressure profile due to increased displacement in the D2 section may differ from the pressure profile due to displacement in the D1 section. For example, referring to FIG. 7, the pressure increase due to displacement in the D2 section, where elastic deformation of the first pressing portion 522a is accompanied by elastic deformation of the second pressing portion 522b may be greater than the pressure increase due to displacement in the D1 section. Accordingly, the elastic member 520 may control the swelling phenomenon more effectively by applying strong surface pressure corresponding to the expansion of the battery cell 110.

Meanwhile, in order to prevent excessive surface pressure from being applied to the battery cell 110, the pressure profile in section D2 may be adjusted to have a value within an appropriate range. For example, referring to FIG. 7, as the cell stack 100 continues to expand, the elastic member 520 may be configured to have a high-stiffness section (the D3 section) in which the elastic force increases rapidly according to displacement.

In the D3 section, there is a risk that excessive surface pressure may be applied to the battery cell 110, which may cause damage to the battery cell 110 or lead to capacity degradation. In order to prevent this, before entering the high stiffness region, the elastic member 520 may form multiple gentle elastic force sections (in other words, the D1 section and the D2 section) implemented by the first pressing portion 522a and the second pressing portion 522b having different widths, and may form a wide range of appropriate pressure sections before entering the high-stiffness region.

For example, the plurality of elastic ribs 522 consisting of pressure portions (the first pressing portion 522a and the second pressing portion 522b) having different widths may form a linear pressure profile proportional to displacement in each pressure section, and accordingly, nonlinear rapid pressure increase due to increasing displacement may be prevented, and the section in which the surface pressure is applied to the battery cell within an appropriate range (for example, a pressure lower than the D3 section) may be significantly increased.

In the existing technology, it is difficult to set the elastic force for each section according to the degree of deformation using only the compression pad provided in the cell stack, and the compression pad has a problem where the pressure increases rapidly after the initial pressure section, causing excessive surface pressure applied to the battery cell.

Meanwhile, according to an example embodiment, the elastic member 520 may be configured to apply appropriate elastic force for each situation since the rate of increase of the elastic force may be set differently in the initial pressure section and the subsequent driving pressure section. Moreover, by a number of elastic ribs 522 consisting of the pressing portions (the first pressing portion 522a and the second pressing portion 522b) having different widths, the displacement section may be formed as long as possible to which an appropriate level of elastic force is applied, and thus excessive surface pressure from being applied to the battery cell 110 may be prevented, and thus the lifespan of the battery cell 110 may be improved.

In addition, the elastic member 520 according to the example embodiments can appropriately respond to the above-described initial pressure section and driving pressure section as a single member, and thus it is not necessary to dispose a plurality of pressing members inside the battery module 10, thereby making it possible to implement a battery module 10 that is structurally simple and has improved space efficiency.

Meanwhile, according to an example embodiment, the widths of the first pressing portion 522a and the second pressing portion 522b of the elastic member 520 may be implemented in various variations, and accordingly, the pressure profiles in the initial pressure section and the driving pressure section may be formed in various ways. The elastic member 520 with an optimal shape may be provided to correspond to the specifications or usage environment of the battery module 10.

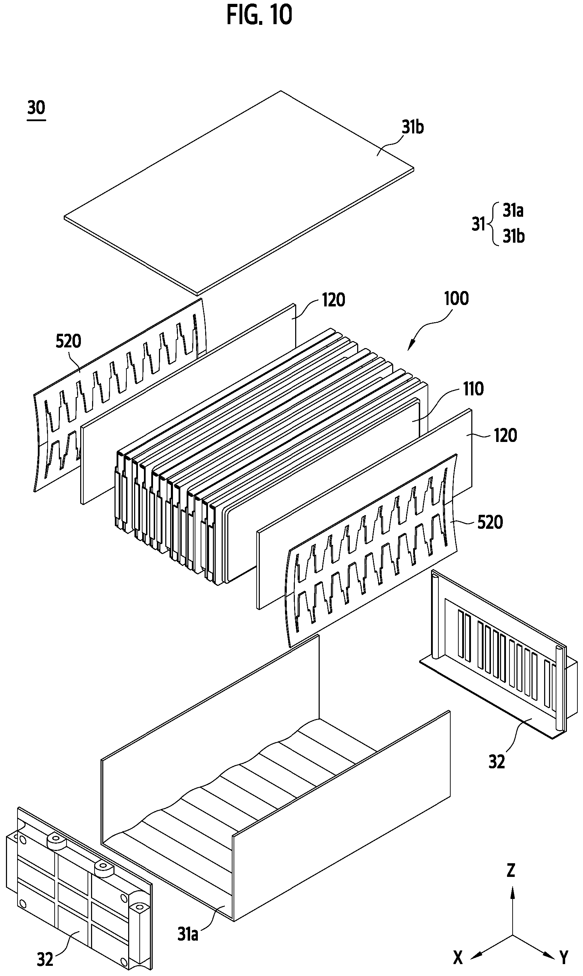

Hereinafter, referring to FIG. 10, a battery module 30 according to another example embodiment is described.

FIG. 10 is an exploded perspective view of the battery module 10 according to another example embodiment.

Referring to FIG. 10, in another example embodiment, the battery module 30 may include a housing 31 having an internal space, the plurality of battery cells 110 accommodated in the internal space, and an end cover assembly 32 coupled to at least one side of the housing 31 and including a conductive busbar electrically connected to the battery cells 110.

The housing 31 provides an interior space that may accommodate one or more cell stacks 100. The housing 31 may be formed of a material having a predetermined stiffness to protect the cell stack 100 and other electrical components contained in the internal space from external impact. For example, the housing 31 may include a metal material such as iron, stainless steel, or aluminum.

The housing 31 may include a lower frame 31a and an upper cover 31b that are joined to each other. The lower frame 31a may be configured as a U-shaped structure with the upper and both sides open, on which the cell stack 100 is installed, and the upper cover 31b may be configured to be coupled to the open upper portion of the lower frame 31a to cover the upper surface of the cell stack 100.

However, the structure of the housing 31 is not limited thereto, and the structure of the housing 31 may be of any shape as long as the structure of the housing 31 has an internal space that accommodates at least one cell stack 100. For example, the housing 31 may be constructed as an integral mono-frame in which the upper cover 31b and the lower frame 31a are formed as one piece and both sides are open.

The end cover assembly 32 may be attached to one open side of the housing 31. For example, as illustrated in FIG. 10, a pair of end cover assemblies 32 may be provided and each end cover assembly 32 may be joined to each open side of the housing 31.

The housing 31 may accommodate the cell stack 100. Here, the cell stack 100 corresponds to the cell stack 100 described above through FIG. 1 to FIG. 9, and thus for description thereon, reference may be made to the description on the cell stack 100 with respect to FIG. 1 to FIG. 9.

The elastic member 520 may be placed between the cell stack 100 and the housing 31. Here, since the elastic member 520 has the same structure and function as the elastic member 520 described with reference to FIG. 1 to FIG. 9, for detailed description thereon, reference may be made to the descriptions on the elastic member 520 in FIG. 1 to FIG. 9.

In the battery module 30 according to the example embodiment illustrated in FIG. 10, the elastic member 520 may be directly fixed to the housing 31. In other words, unlike the descriptions with reference to FIG. 1 to FIG. 9 above, the elastic member 520 may be fixed to the housing 31 while being interposed between the cell stack 100 and the housing 31. Accordingly, the frame portion 521 of the elastic member 520 may be fixed to the housing 31, and the plurality of elastic ribs 522 extending from the frame portion 521 may elastically deform in accordance with the expansion of the cell stack 100 and apply surface pressure to the cell stack 100. Meanwhile, with respect to the technical characteristics of the elastic force exerted by the elastic rib 522 of the elastic member 520, the descriptions with reference to FIG. 1 to FIG. 9 above may be referred to.

In order to evenly distribute the elastic force generated from the elastic member 520 to the cell stack 100, one or more pressing plates (not illustrated) or one or more compression pads 120 may be placed between the elastic member 520 and the cell stack 100. With respect to detailed description on the pressing plate (not illustrated) and the compression pad 120, referred to may be the descriptions on the pressing plate 530 and the compression pad 120 illustrated in FIG. 1 to FIG. 9.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described example embodiment may be implemented with some elements deleted, and each example embodiment may be implemented in combination with each other.

## Claims

1. A battery module comprising:
a cell stack in which a plurality of battery cells are stacked;
an elastic member that is placed at one side of the cell stack, and is configured to apply surface pressure to the cell stack in a direction parallel to a direction in which the plurality of battery cells are stacked; and
a module housing in which the cell stack and the elastic member are accommodated,
wherein the elastic member comprises:
a frame portion that is supported by the module housing; and
a plurality of elastic ribs extending from the frame portion in an inclined direction with respect to the direction in which the plurality of battery cells are stacked, and configured to elastically deform as the cell stack expands so as to apply an elastic force to the cell stack.

2. The battery module of claim 1,
wherein at least one of the plurality of elastic ribs comprises:
a first pressing portion extending from the frame portion; and
a second pressing portion connected to an end portion of the first pressing portion,
wherein a width of the second pressing portion is smaller than a width of the first pressing portion.

3. The battery module of claim 2,
wherein, in the elastic member, the plurality of elastic ribs are arranged symmetrically with respect to a central axis parallel to a longitudinal direction of the battery cell.

4. The battery module of claim 3,
wherein, at least one of the first pressing portion or the second pressing portion has a width that gradually decreases toward the central axis.

5. The battery module of claim 2,
wherein the first pressing portion and the second pressing portion are made of different materials.

6. The battery module of claim 1,
wherein the frame portion is provided as a frame-shaped structure having a pair of long side edges and a pair of short side edges, and
wherein the plurality of elastic ribs are connected to at least one of the pair of long side edges.

7. The battery module of claim 1,
further comprising a compression pad that is placed between the plurality of battery cells and the elastic member.

8. A battery pack comprising:
a plurality of battery modules, each comprising a plurality of battery cells; and
a pack housing in which the plurality of battery modules are accommodated,
wherein at least one battery module among the plurality of battery modules comprises:
a cell stack in which the plurality of battery cells are stacked;
a side plate that is placed at one side of the cell stack and coupled to the pack housing; and
an elastic member that is placed between the cell stack and the side plate, and
wherein the elastic member comprises:
a frame portion that is supported by the side plate; and
a plurality of elastic ribs extending from the frame portion in an inclined direction with respect to the direction in which the plurality of battery cells are stacked, and configured to elastically deform as the cell stack expands so as to apply an elastic force to the cell stack.

9. The battery pack of claim 8,
wherein the at least one battery module further comprises a pressing plate interposed between the cell stack and the elastic member.

10. The battery pack of claim 9,
wherein the at least one battery module further comprises a connecting member that connects the pressing plate and the side plate.

11. The battery pack of claim 9,
wherein the at least one battery module further comprises a compression pad that is placed between the pressing plate and the plurality of battery cells.

12. The battery pack of claim 8,
wherein, in the at least one battery module, a lower surface of the cell stack is exposed to the pack housing.

13. The battery pack of claim 8,
wherein at least one elastic rib among the plurality of elastic ribs comprises:
a first pressing portion extending from the frame portion; and
a second pressing portion connected to an end portion of the first pressing portion,
wherein a width of the second pressing portion is smaller than a width of the first pressing portion.

14. The battery pack of claim 8,
wherein the frame portion is provided as a frame-shaped structure having a pair of long side edges and a pair of short side edges, and
wherein the plurality of elastic ribs are connected to at least one of the pair of long side edges.
